(19) Europäisches Patentamt
European Patent Office
Office européen des brevets

(11) Publication number: 0 260 388 B1

(12) **EUROPEAN PATENT SPECIFICATION**

(45) Date of publication of the patent specification: 01.08.90

(51) Int. Cl.[5]: **C09K 19/38,** C08G 18/48, C08G 18/40, C08L 75/02, C08L 75/08, C08J 3/11

(21) Application number: 87109114.6

(22) Date of filing: 24.06.87

(54) **Polyurethanes prepared from liquid crystal-contaning polyols and process for preparing the same.**

(30) Priority: 25.06.86 US 878460

(43) Date of publication of application: 23.03.88 Bulletin 88/12

(45) Publication of the grant of the patent: 01.08.90 Bulletin 90/31

(84) Designated Contracting States: AT BE CH DE ES FR GB IT LI NL SE

(56) References cited:
FR-A- 2 243 234
MAKROMOLEKULARE CHEMIE, supplement 6, March 1984, pages 3-26, Heidelberg; N.A. PLATE et al.: "Thermotropic liquid crystalline polmers - problems and trends"
PATENT ABSTRACTS OF JAPAN, vol. 11, no. 13 (C-397)[2460], 14th January 1987; & JP - A - 61 190 501 (DAICEL CHEM IND LTD) 25-08-1986
CHEMICAL ABSTRACTS, vol. 105, no. 10, 8th September 1986, page 20, column 1, abstract no. 79634c, Columbus, Ohio, US; M. TANAKA et al.: "Liquid-crystalline polyurethane containing biphenyl units", & KOBUNSHI RONBUNSHU 1986, 43(5), 311-314
CHEMICAL ABSTRACTS, vol. 83, no. 4, 28th July 1975, page 62, column 2, abstract no. 29420m, Columbus,

(73) Proprietor: THE DOW CHEMICAL COMPANY, 2030 Dow Center Abbott Road P.O. Box 1967, Midland Michigan 48640-1967(US)

(72) Inventor: Thomas, Comman P., 55 Avacado, Lake Jackson Texas 77566(US)
Inventor: Turner, Robert Burton, 328 Huckleberry, Lake Jackson Texas 77566(US)

(74) Representative: Huber, Bernhard, Dipl.-Chem. et al, Möhlstrasse 22 Postfach 860 820, D-8000 München 86(DE)

(56) References cited: (continuation)
Ohio, US; & US - A - 3 872 050 (W.J. BENTON et al.)
CHEMICAL ABSTRACTS, vol. 92, no. 16, 21st April 1980, page 62, column 1, abstract no. 130405w, Columbus, Ohio, US; & US - A - 4 182 700 (W.J. BENTON et al.)

EP 0 260 388 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to polyurethane polymers prepared from liquid crystal-containing, active hydrogen-containing materials.

Various polymers are prepared from compounds and polymers which contain a plurality of active hydrogen atoms. Principal among these polymers are the polyurethanes and polyureas. In preparing these polymers, it is normally desirable to obtain the best possible physical properties. For example, when a flexible polymeric foam is prepared, it is often desirable to produce a foam which has good load-bearing, resiliency, and tensile properties.

The materials most commonly used in preparing polyurethanes and/or polyureas are polyethers and polyesters which contain two or more active hydrogen-containing groups. Although excellent polymers, both cellular and noncellular, are produced therefrom, it is desirable in certain instances to further improve their properties. One known method of improving the properties of polyurethanes made from polyethers or polyesters is to employ a dispersion of polymer particles in a continuous polyether or polyester polyol phase. These so-called polymer polyols or copolymer polyols contain addition polymers, polyurea or polyurethane-urea particles, or other polymers dispersed through the polyol as a plurality of colloidal (10-1000 nm) particles. The dispersed particles have been shown to improve various properties of the resulting cellular polyurethane and/or polyurea, and often perform a cell-opening function in the production of polyurethane and/or polyurea foam.

However, even with the use of a polymer polyol, improvement in certain properties of the polyurethane and/or polyurea polymer is desired. In particular, it is desirable to provide a cellular polyurethane and/or polyurea having a high modulus as later defined. Such foams are particularly suitable for automobile or other seating, in which the foam desirably feels soft as one sits on it, yet provides sufficient support for adequate comfort.

It would therefore be desirable to provide a polyurethane and/or polyurea polymer having improved physical properties and to provide an active hydrogen-containing composition which reacts with a polyisocyanate to produce a polyurethane and/or polyurea polymer having improved properties.

In one aspect, this invention is a solution or colloidal dispersion of a liquid crystalline polymer in an active hydrogen-containing compound having an average of at least two isocyanate-reactive groups per molecule.

In another aspect, this invention is a polyurethane and/or polyurea polymer prepared by reacting a polyisocyanate with a polyol containing a mesogenic moiety or plurality thereof (hereinafter "liquid crystal-containing polyol") and/or a solution or dispersion of a liquid crystalline polymer in an active hydrogencontaining compound having an average of at least two isocyanate reactive groups per molecule (hereinafter "liquid crystal dispersion").

In another aspect, this invention is a polyurethane and/or polyurea foam containing a liquid crystalline polymer.

In another aspect, this invention is a polyurethane and/or polyurea foam which is prepared from a liquid crystal-containing polyol.

In yet another aspect, this invention is a crosslinked, noncellular or microcellular polyurethane and/or polyurea polymer containing a liquid crystalline polymer.

In still another aspect, this invention is a crosslinked, noncellular or microcellular polyurethane and/or polyurea polymer which is prepared from a liquid crystal-containing polyol.

The inclusion of a liquid crystal-containing polyol or a liquid crystal dispersion in an active hydrogen-containing composition has surprisingly been found to yield significant and unexpected improvements in the physical properties of polyurethane and/or polyurea polymers prepared therefrom. In particular, cellular polyurethane and/or polyurea polymers made from these solutions have excellent firmness and high moduli.

In one aspect of this invention, a liquid crystal-containing polyol is reacted with a polyisocyanate to form a polyurethane and/or polyurea polymer. The term "polyol" is used herein to broadly include compounds having a plurality of isocyanate-reactive groups, including hydroxyl, primary or secondary amine, carboxylic acid or mercaptan groups. The liquid crystal-containing polyol can be any material which reacts polyfunctionally with a polyisocyanate, and which contains liquid crystalline (mesogenic) groups. Note that although the liquid crystal-containing polyol contains liquid crystalline groups, the liquid crystal-containing polyol itself may or may not be mesogenic although it preferably is mesogenic. Liquid crystalline (mesogenic) groups are moieties which can aggregate to form a nematic, smectic or twisted nematic (cholesteric) ordering. In the liquid crystal-containing polyol, the mesogenic moieties can form part of the backbone of the polyol, or be present as pendant groups. Such compounds include, for example, hydroxylterminated polyesters containing an internal grouping as represented by the structure

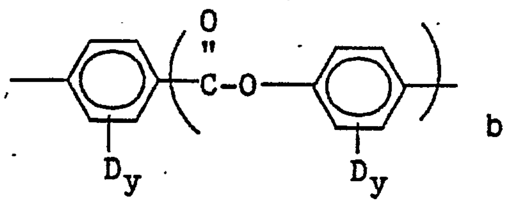

wherein b is a number from 1 to 10, preferably from 1 to 3, D is lower alkyl or halogen and y is 0, 1, 2, 3 or 4. Another class of suitable such compounds include mesogen-initiated polyethers. These are advantageously prepared by adding an alkylene oxide to a mesogenic compound having a plurality of hydroxyl, amine or other groups which react with the alkylene oxide in a ring-opening reaction. Propylene oxide and/or ethylene oxide derivatives of cellulose or a hydroxyalkylcellulose are examples of mesogen-initiated polyols.

Of particular interest are liquid crystal-containing polyols prepared by reacting an ethylenically unsaturated polyether with an ethylenically unsaturated liquid crystalline monomer and a secondary monomer having both ethylenic unsaturation and an isocyanate-reactive group. Suitable ethylenically unsaturated polyethers include hydroxyl-terminated polymers of propylene oxide and/or ethylene oxide which are partially or completely capped with a monomer which is reactive with the hydroxyl group of the polyether and which also contains ethylenic unsaturation, such as an ethylenically unsaturated isocyanate or carboxylic acid chloride. Especially suitable ethylenically unsaturated polyethers are described, for example, in U.S. Patent Nos. 4 394 491 and 4 513 124. These ethylenically unsaturated polyethers are then reacted with a mixture of the liquid crystalline monomer and the secondary monomer. Especially suitable as the secondary monomer are, for example, hydroxylethylmethacrylate, hydroxyethylacrylate, and hydroxylpropylacrylate. In preparing such liquid crystalline polymers, the liquid crystalline monomer comprises at least 25, more preferably at least 35 to 90, most preferably 50 to 80 mole percent of the liquid crystalline and secondary monomers. The relative amounts of monomers and unsaturated polyol are chosen such that the resulting liquid crystal-containing polyol is colloidally dispersible, preferably soluble, in additional amounts of a polyether polyol. Liquid crystal-containing polyols prepared in this manner have several particular advantages, such as excellent solubility in polyether polyols. A further advantage is that the use of the difunctional monomer creates a polymer having a relatively high functionality, which often improves certain properties of polyurethanes, particular cellular polyurethanes, made therefrom.

The liquid crystal-containing polyol may constitute the sole active hydrogen-containing compound used in preparing the polyurethane and/or polyurea, or may be dissolved in, dispersed in or blended with another active hydrogen-containing compound. In either case, it is preferred that the liquid crystalline moieties contained therein constitute about 1 to 80, preferably 3 to 60 percent by weight of the active hydrogen-containing compound(s).

Alternatively, or in conjunction with the liquid crystal-containing polyol, a liquid crystal dispersion is used to prepare a polyurethane and/or polyurea polymer. The liquid crystal dispersion of this invention comprises an active hydrogen-containing compound, or mixture thereof, in which is dissolved or dispersed a liquid crystalline polymer. The liquid crystalline polymer is one which is soluble or colloidally dispersible in an active hydrogencontaining compound, and which contains a plurality of pendant liquid crystalline moieties attached to the backbone of the polymer, and/or a backbone containing liquid crystalline moieties. By colloidally dispersible, it is meant that the polymer can be dispersed in an active hydrogen-containing compound as a plurality of particles having an average diameter of 10 to 1000 nm.

The molecular weight of the liquid crystalline polymer is not especially critical if the liquid crystalline polymer is soluble in the active hydrogen-containing compound, as long as it is sufficiently high that the liquid crystalline moieties can aggregate to form a mesomorphic structure. Mesomorphic structures are generally formed in the polymer when the liquid crystalline moiety has an aspect ratio of at least 2.25, preferably at least 2.4.

When the liquid crystalline polymer is dispersed, rather than dissolved, in the active hydrogen-containing compound, the molecular weight and particle size of the liquid crystalline polymer are advantageously chosen such that the polymer is colloidally dispersed in the active hydrogen-containing compound. It is also preferable that the molecular weight and composition of the liquid crystalline polymer are chosen together such that the polymer can undergo a phase transition to a mesomorphic state at some temperature below that at which the polymer and the active hydrogen-containing compound degrade. Preferably, the dispersed liquid crystalline polymer undergoes such phase transition under conditions of temperature and shear such as are encountered in the reaction of the liquid crystal dispersion with a polyisocyanate to form a polyurethane and/or polyurea polymer. More preferably, the liquid crystalline polymer undergoes such phase change at a temperature of from 40 to 130°C.

One important class of liquid crystalline polymers are addition polymers prepared by homopolymerizing or copolymerizing an ethylenically unsaturated monomer which exhibits liquid crystalline characteristics

when in polymerized form. Note that the monomer itself does not have to be liquid crystalline, as long as polymers thereof are mesogenic. Exemplary such monomers (hereinafter liquid crystalline monomers) are described, for example, in Blumstein, et al, "Liquid Crystalline Order in Polymers with Mesogenic Side Groups", Liquid Crystalline Order in Polymers, A. Blumstein, ed., Academic Press, Inc., New York (1978). Ethylenically unsaturated monomers which contain substantially linear, rigid groups are useful herein. Such monomers include ethylenically unsaturated biphenyls; cyclohexyl-phenyl compounds; certain conjugated dienes; diverse monomers containing ethylenic unsaturation and an internal grouping having the structure

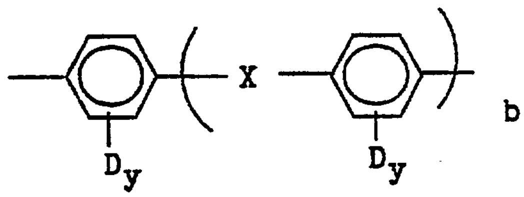

wherein b, y and D are as described before, and X represents a linkage which is capable of participating in conjunction with the aromatic rings, such as, for example, -N=N-,

$-N(\rightarrow O)=N-$, $-COO-$, $-C=C-$, $-C\equiv C-$, $-N=C-$, $-NCO-$, and $-NCOO-$;

ethylenically unsaturated steroids and other monomers such as are described in Tables 1-4, pages 108-120 of Blumstein, supra. Three major types of such liquid crystalline monomers include derivatives of benzoic acid, Schiff base derivatives and steroid derivatives. In addition, various miscellaneous monomers are suitable.

Benzoic acid derivatives can be represented by the structure

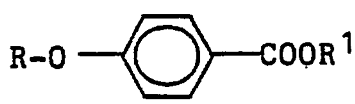

wherein R represents an inertly substituted radical having polymerizable ethylenic unsaturation and $R^1$ represents hydrogen or an inertly substituted organic radical preferably devoid of polymerizable ethylenic unsaturation. By "inertly substituted", it is meant that the moiety referred to has no substituent group, or has substituent groups which do not undersirably affect the mesogenic character thereof. Such benzoic acid derivatives are conveniently prepared by reacting an acid chloride with a p-hydroxy benzoic acid or ester thereof according to the equation:

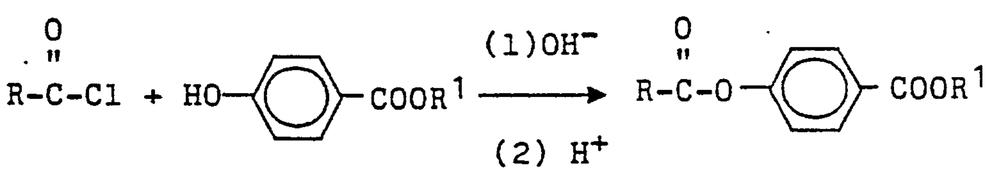


wherein R and $R^1$ are as defined before. Preferably, R is $H_2C{=}CH-$, $H_2C{=}C(CH_3)-$, $H_2C{=}C(CH_3)CH_2-$, $H_2C{=}CHOCH_2CH_2-$, or similar group. $R^1$ is preferably lower alkyl or hydrogen and most preferably hydrogen.

Suitable Schiff base derivatives comprise two major types, the styrene derivatives and the acryloyl or methacryloyl derivatives. The styrene derivatives can generally be represented by the structure

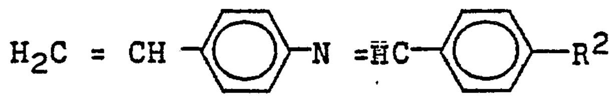

wherein $R^2$ is a radical which does not undesirably affect the mesogenic behavior of a polymer of the monomer or the solubility or dispersibility of the polymer in an active hydrogen-containing compound or polymer. Exemplary groups $R^2$ include cyano, halogen, straight chain alkyl ether, alkyl, phenyl, cyclohexyl, $-CH=CHCOOR^3$, wherein $R^3$ is a straight chain alkyl, acetyl, carboxylic acid or ester group or amido group.

The styrene-based Schiff base derivatives are advantageously prepared by reacting p-amino styrene with a p-substituted benzaldehyde according to Equation II

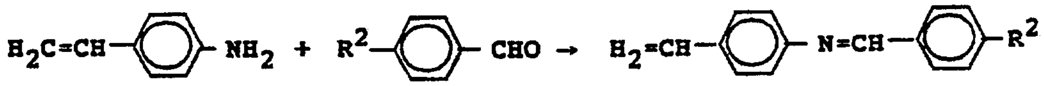

wherein $R^2$ is as defined before. The p-amino styrene itself can be prepared by the reduction of p-nitrostyrene or the dehydration of para-2-hydroxyethyl aniline.

The acryloyl or methacryloyl Schiff base derivatives are advantageously prepared by reacting the acid chloride with p-hydroxybenzaldehyde to form the unsaturated aldehyde, and further reacting the aldehyde with a para-substituted aniline, as illustrated by Equation III:

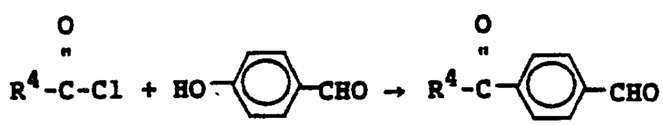

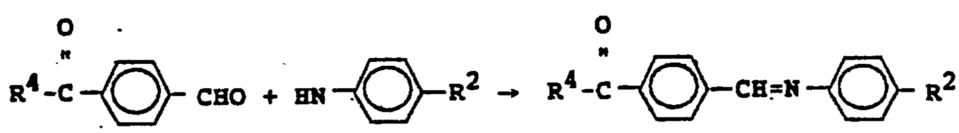

wherein $R^2$ is as defined before, and $R^4$ is $CH_2=CH-$ or $CH_2=C(CH_3)-$.

Suitable steroid derivatives can be prepared by reacting an unsaturated acid, an unsaturated acid chloride or unsaturated isocyanate with cholesterol or cholestanol. Such derivatives can be represented by the structure

R–Y–A

wherein A represents

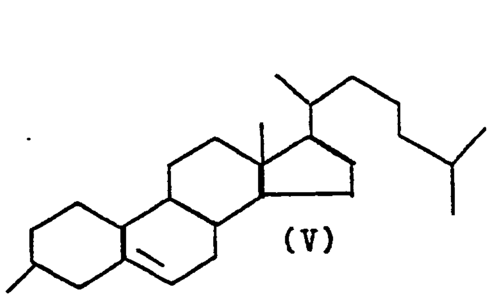

(V)

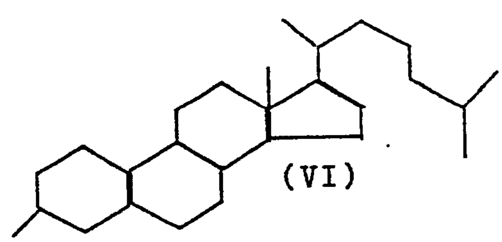

(VI)

Y represents –COO– or –N–COO– and R is as defined before. In such steroid derivatives, R is advantageously $CH_2=CH-$, $CH_2=C(CH_3)-$, trans-$CH_3CH=CH-$, $CH_2=CH(CH_2)x-$, wherein x is a number from 1 to 10, preferably 1 to 4, as well as a straight chain mono- or polyunsaturated hydrocarbyl group. Suitable steroid derivatives are described in Table 3, pages 116–117 of Blumstein, supra. Of such steroid

derivatives, the cholesterol derivative of isocyanatoethyl methacrylate or other unsaturated isocyanate is preferred due to its ease of manufacture.

The liquid crystalline polymer containing pendant mesogenic groups can be prepared by a free-radical polymerization of an ethylenically unsaturated monomer as described before. Suitable processes for the free-radical polymerization of ethylenically unsaturated monomers are well known in the art, and reference is made thereto for the purposes of this invention. The polymerization is conducted under conditions such that the resulting polymer is soluble or dispersible in an active hydrogen-containing compound or polymer.

Solution polymerization techniques are particularly suitable for polymerizing the ethylenically unsaturated monomer. In such solution polymerization, the monomer is polymerized in the presence of an inert solvent. By "inert" it is meant that the solvent does not react with the monomer, or otherwise undesirably interfere with the polymerization. When a solvent is used, it is advantageously stripped from the liquid crystalline polymer after the polymer is dissolved or dispersed in the active hydrogen-containing compound. Alternatively, the monomer can be polymerizaed insitu in the active hydrogen-containing compound or polymer. In such insitu polymerization, it is common practice to employ a dispersant to aid in the solubility or dispersibility of the liquid crystalline polymer. Particularly suitable dispersants include adducts of the active hydrogen-containing compound and a difunctional compound having an active hydrogen-reactive group and an ethylenically unsaturated group, such as, for example, an ethylenically unsaturated isocyanate, carboxylic acid and carboxylic acid chloride. Techniques for such insitu polymerization are taught, for example, in U.S. Patent Nos. 4,460,715 and 4,394,491.

The polymerization is advantageously conducted in the presence of a source of free radicals. Any of the common free radical initiators such as the well-known organic peroxides, peroxyesters and azo compounds are suitable for that purpose. In addition, radiation or other free radical sources can be used.

The polymerization is advantageously conducted at a temperature of from -20°C to 150°C. The optimum polymerization temperature is, of course, dependent on the particular monomer used, the particular free radical initiator used, if any, and other circumstances which are well known in polymerizing ethylenically unsaturated monomers.

In order to control the molecular weight of the polymer, it may be advantageous to adjust the level of initiator used, or to employ a chain transfer agent in the polymerization. Typically, the use of a greater quantity of a free radical initiator or chain transfer agent tends to decrease the molecular weight of the resulting polymer. Thus, a free radical initiator is advantageously employed in an amount of from 0.01 to 10, preferably 0.05 to 5 parts per 100 parts monomer. Suitable chain transfer agents include, for example, mercaptans, carboxylic acids and halogen-containing compounds. These and other suitable chain transfer agents are described, for example, in EP-A 0 091 036.

The liquid crystalline monomer may be homopolymerized or copolymerized with another monomer which may or may not be mesogenic. Any such copolymerization may be a random copolymerization, or a block or graft copolymerization. The sole limitation on such other monomer is that it must be of such composition and present in such an amount that the polymer is mesomorphic. Typically, the polymer will be mesomorphic when at least 25, preferably 35 to 100, more preferably 50 to 100 mole percent of the monomers employed in its preparation are liquid crystalline monomers.

Suitable nonmesogenic monomers which are useful comonomers for the liquid crystalline polymer include those described in U.S. Patent No. 4,394,491. Of particular interest are the acrylic and methacrylic esters; the unsaturated nitriles, particularly acrylonitrile; and the vinyl aromatics, particularly styrene.

In addition to polymers of ethylenically unsaturated monomers, polymers of other types of monomers are useful herein as long as the resulting polymer contains liquid crystalline pendant groups. Of particular interest are polypeptides such as poly(g-benzyl-L-glutamate) as described by DuPre, "Liquid Crystals", Kirk-Othmer Encyclopedia of Chemical Technology, 3d ed. Vol. 14, pp. 395-427, John Wiley and Sons, New York (1981).

Main chain liquid crystalline polymers, another useful class of liquid crystalline polymer, contain mesogenic moieties as part of the polymer backbone. Any of such polymers which are soluble or dispersible in an active hydrogen-containing compound, or can be so dissolved or dispersed by use of a compatibilizer, co-solvent, or other suitable technique, can be used. Exemplary such main chain liquid crystalline polymers include copolymers of e.g. hydroquinone and terephthaloyl chloride, particularly terpolymers of hydroquinone or aryl-substituted hydroquinones, terephthaloyl chloride and an alkylene oxide, as well as other main chain liquid crystalline polymers such as are described by Blumstein et al, "Structure-Property Relations in Flexible Thermotropic Mesophase Polymers", Polymeric Liquid Crystals, Blumstein, ed. Plenum Press, New York (1985).

The liquid crystalline polymer is dissolved or dispersed in an active hydrogen-containing compound. The active hydrogen-containing compound can be of any composition as long as the liquid crystalline polymer is soluble or dispersible therein at beneficial proportions. By "soluble or dispersible at beneficial proportions", it is meant that a sufficient amount of the liquid crystalline polymer can be dissolved or dispersed into the active hydrogen-containing compound to provide property or processing improvement to a polyurethane and/or polyurea polymer prepared therefrom. Typically, such improvement is seen when at least 1, preferably 1 to 80, more preferably 3 to 60 parts by weight of a dispersed liquid

crystalline polymer are present per 100 parts of the active hydrogen-containing compound. When the liquid crystalline polymer is dissolved in the active hydrogen-containing compound, preferably 1 to 20, more preferably 1 to 10 parts by weight are present per 100 parts of the active hydrogen-containing compound.

The active hydrogen-containing compound in which the liquid crystalline polymer is dispersed is selected according to the properties which are desired in a polyurethane and/or polyurea polymer prepared therefrom. It is well known to employ various equivalent weight and functionality active hydrogen-containing compounds to produce polyurethane and/or polyurea polymers having various properties. For example, in the preparation of elastomeric polyurethanes and/or polyureas, relatively high equivalent weight (400 to 10 000) and low functionality (2 to 4 functional) active hydrogen-containing compounds are preferred. For making more rigid polyurethanes and/or polyureas, lower equivalent weight (31 to 1000), higher functionality (2 to 16 functional) materials are preferred. The selection of proper active hydrogen-containing compounds for use in preparing particular polyurethane and/or polyurea polymers is considered to be a matter of ordinary choice to one skilled in the art.

Suitable active hydrogen-containing compounds are described in U.S. Patent No. 4 394 491. Preferred such compounds are polyether polyols and the corresponding amine-terminated polyethers; polyester polyols; the so-called polymer polyols, particularly those containing dispersed polymers of ethylenically unsaturated monomers, polyurea polymers or polyurethanepolyurea polymers; alkylene glycols and amine-terminated chain extenders as are described in U.S. Patent No. 4 218 543. Most preferred are polyether polyols having a functionality of 2 to 4 and an equivalent weight of 800 to 3000, the corresponding amine-terminated polyethers, and copolymer polyols having dispersed polymers of ethylenically unsaturated monomers prepared from such polyether polyols as well as mixtures of these materials with alkylene glycols and/or amine-terminated chain extenders. It has surprisingly been found that the typical reinforcing effects of copolymer polyols are further increased with the use of a liquid crystal-containing polyol.

The liquid crystal-containing polyol or liquid crystal dispersion is formed into a polyurethane and/or polyurea polymer by reaction with a polyisocyanate. Procedures for conducting such reaction are well-known and described, for example, by Ulrich, "Urethane Polymers", The Kirk-Othmer Encyclopedia of Chemical Technology, 3rd ed., Vol. 23 pp. 576–608 New York (1983).

Either aromatic or aliphatic organic polyisocyanates having an average of at least 2 isocyanate groups per molecule are useful. Such polyisocyanates are described, for example, in U.S. Patent Nos. 4 065 410; 3 401 180; 3 454 606; 3 152 162; 3 492 330; 3 001 973; 3 594 164; and 3 164 605.

Aromatic polyisocyanates which are particularly useful herein include, for example, 2,4-and/or 2,6-toluene diisocyanate, diphenylmethanediisocyanate, p-phenylene diisocyanate, polymethylenepolyphenylpolyisocyanates and mixtures thereof. Also useful are polymeric derivatives of diphenylmethanediisocyanate as well as prepolymers or quasi-prepolymers thereof.

Particularly useful aliphatic polyisocyanates include, for example, the hydrogenated derivatives of the foregoing aromatic polyisocyanates, as well as hexamethylene diisocyanate, isophoronediisocyanate and 1,4-cyclohexane diisocyanate.

In addition, prepolymers and quasi-prepolymers of the foregoing polyisocyanates having an –NCO content of 0.5 to 30% by weight are useful herein.

The polyisocyanate is advantageously present in an amount sufficient to provide in the reaction mixture from 70 to 500, preferably 80 to 150, and more preferably 95 to 120 isocyanate groups per 100 active hydrogen-containing groups. Higher amounts of the polyisocyanate can be used when the formation of an isocyanurate-containing polymer is desired.

In general, noncellular polyurethane and/or polyurea elastomers (those having an unfilled density of at least 0.8 g/cm$^3$) are prepared by reacting a relatively high equivalent weight active hydrogen-containing compound (preferably 800 to 3000 molecular weight) and a chain extender compound with a polyisocyanate. The chain extender compound advantageously has an equivalent weight of from 31 to 250 and a functionality of 2 to 4, preferably 2. The chain extender is preferably a glycol or a diamine, with $C_2$-$C_6$ alkylene glycols and stearically hindered aromatic diamines being preferred. In preparing noncellular or microcellular elastomers, a conventional casting process, particularly a solventless casting process, or a reaction injection molding process can be employed. Suitable casting techniques are described, for example, in U.S. Patent No. 4,556,703. Reaction injection molding techniques are described, for example, in Sweeney, F.M., Introduction to Reaction Injection Molding, Technomics, Inc., 1979. Suitable formulations for use in RIM processes are described, for example, in U.S. Patent Nos. 4,269,945; 4,218,610; 4,297,444, and 4,530,941. In these formulations substitution of all or a portion of one or more of the active hydrogen-containing compounds with a liquid crystalline polyol or a liquid crystal dispersion having a similar equivalent weight functionality and reactivity is made.

In preparing elastomeric polyurethane and/or polyurea polymers, either a one-shot or two-shot (i.e. prepolymer) process can be employed. In the two-shot process, all or most of the relatively high equivalent weight active hydrogen-containing compound is reacted with an excess of a polyisocyanate to form an isocyanate-terminated prepolymer, which is then reacted with the chain extender and any remaining high equivalent weight material. In the one-shot process, most or all of the relatively high equivalent weight material is mixed with the chain extender and the mixture is reacted with the polyisocyanate. However, certain prepolymers and quasi-prepolymers may be employed as the polyisocyanate component even in a oneshot process.

Preferably, the polyurethane and/or polyurea polymer is cellular, i.e. has an unfilled density of less than 0.8 g/cm³. More preferably, the polyurethane and/or polyurea is a flexible polyurethane foam. Such flexible polyurethane foam is advantageously prepared by reacting a relatively high equivalent weight liquid crystal-containing polyol or liquid crystal dispersion with a polyisocyanate in the presence of a blowing agent. In preparing flexible polyurethane foams, it is advantageous to also employ a surfactant to stabilize the foaming reaction mass and to compatibilize the various components of the reaction mixture, and to employ various catalysts for both the urethane forming and blowing reactions. In addition, a crosslinker such as diethanolamine is often employed to promote rapid initial curing.

In preparing flexible polyurethane foam, the liquid crystal-containing polyol or the major active hydrogencontaining compound(s) in the liquid crystal dispersion advantageously has an equivalent weight of from 800 to 3000 and an average functionality (defined herein as the number of active hydrogen-containing groups per molecule) of from 2 to 4, more preferably 2 to 3.

Suitable blowing agents for preparing foams are well known and include, for example, water, low boiling halogenated alkanes such as methylene chloride, monochlorodifluoromethane, dichlorodifluoromethane, dichloromonofluoromethane, the so-called "azo" blowing agents, finely divided solids and the like as well as other materials which generate a gas under the conditions of the foaming reaction. Water, the halogenated methanes or mixtures thereof are preferred. When water is used as the blowing agent, from 0.5 to 10, preferably 1 to 5 parts by weight of water are used per 100 parts of active hydrogen-containing compound(s). The halogenated alkanes are typically used in an amount of from 5 to 75 parts per 100 parts by weight of active hydrogen-containing compound(s). However, the use of varying amounts of blowing agents to achieve a desired density is well known in the art, and it may in some instances be advantageous to use amount of blowing agents outside of the ranges mentioned before.

Suitable surfactants include the diverse silicone surfactants, preferably those which are block copolymers of a polysiloxane and a poly(alkylene oxide). Suitable such surfactants include, for example, Y-10184 surfactant, available from Union Carbide Corporation. Surfactants are used in an amount sufficient to stabilize the foaming reaction mixture against collapse until the foam is cured, and to promote the formation of a somewhat uniform cell structure. Typically, from 0.1 to 5, preferably 0.3 to 3 parts by weight of surfactant are employed per 100 parts of active hydrogen-containing compound(s).

Crosslinkers which are commonly employed in preparing flexible polyurethane foams include low equivalent weight alkanolamines such as, for example, ethanolamine, diethanolamine, triethanolamine, propanolamine, dipropanolamine, tripropanolamine, methyldiethanol amine, and methyldipropanol amine. Also useful are the alkylene glycols and low equivalent weight hydroxyl-terminated polyols such as glycerine and trimethylol propane. Such crosslinkers are generally used in minor amounts, preferably from 0.2 to 10, more preferably 0.5-5 parts per 100 parts of relatively high equivalent weight active hydrogen-containing compounds.

Catalysts for preparing polyurethane and/or polyurea foams include organometallic catalysts and tertiary amine compounds. Of the organometallic catalysts, organotin catalysts are generally preferred. Suitable catalysts are described, for example, in U.S. Patent No. 4,495,081. When using such catalysts, an amount sufficient to increase the rate of the urethane forming (and foaming reactions, when a cellular polymer is formed) is used. Typically, from 0.001 to 0.5 part of an organometallic catalyst is used per 100 parts of active hydrogen-containing compound(s). Tertiary amine-containing compounds are used in amounts ranging from 0.1 to 3 parts per 100 parts of active hydrogen-containing material. When polyisocyanurate foams are produced, alkali metal compounds are usefully employed as trimerization catalysts.

The foam can be prepared in any convenient manner. The foam can be prepared by reacting the components in a closed mold, or by permitting the reacting components to freely rise. Processes for preparing polyurethane foams are described, for example, in U.S. Patent No. 4,451,588.

In addition to preparing flexible foams and noncellular elastomers, the liquid crystalline polyols of this invention are useful in preparing rigid cellular and noncellular polyurethane and/or polyurea polymers. Methods for making such materials are described, for example, in U.S. Patent Nos. 4,579,844 and 4,569,951. Rigid polyurethane foams are advantageously prepared using active hydrogen-containing compounds having an equivalent weight of from 31 to 400 and an average functionality of from 3 to 16, preferably 3 to 8.

The polyurethane and/or polyurea polymers of this invention are useful, for example, as seating, cushioning, industrial elastomers, automobile fascia and bumpers and thermal insulation.

The following examples are provided to illustrate the invention, but are not intended to limit the scope thereof. All parts and percentages are by weight unless otherwise indicated.

Following is a list of test procedures used in the examples and comparative runs in determining the molded foam properties.

| Properties | Test Procedures | | |
|---|---|---|---|
| Tensile Strength | ASTM | 3574-81 | Test E |
| Elongation | ASTM | 3574-81 | Test E |
| Tear Strength | ASTM | 3574-81 | Test F |
| Resiliency | ASTM | 3574-81 | Test H |
| Compression Set | ASTM | 3574-81 | Test D |
| ILD (Indentation Load Deflection) | ASTM | 3574-81 | Test B |
| Modulus | Ratio of 65% ILD to 25% ILD | | |
| Air Flow | ASTM | 3574-81 | |

In the Tables, "LCP" is liquid crystalline polymer and "% CPP solids" is % styrene/acrylonitrile particles in the polyols.

Example 1

A. Preparation of Unsaturated Cholesterolic Monomer

In a suitable reactor, 78 grams (0.2 mole) of cholesterol were dissolved in 600 milliliters of freshly distilled toluene. To this solution was added 0.3 ml of an organotin catalyst (T-9, sold by Air Products and Chemicals, Inc.). While stirring at room temperature, a solution of 32 grams of isocyanatoethylmethacrylate (IEM) in 40 ml of toluene was added drop-wise. After all the IEM solution was added, the temperature was raised to 62°C for two hours. The resulting monomer crystallized out on cooling. The crystallized monomer was recovered and dried under vacuum at 100°C for 24 hours. The resulting monomer, which had a melting point of 159°C, had the following structure:

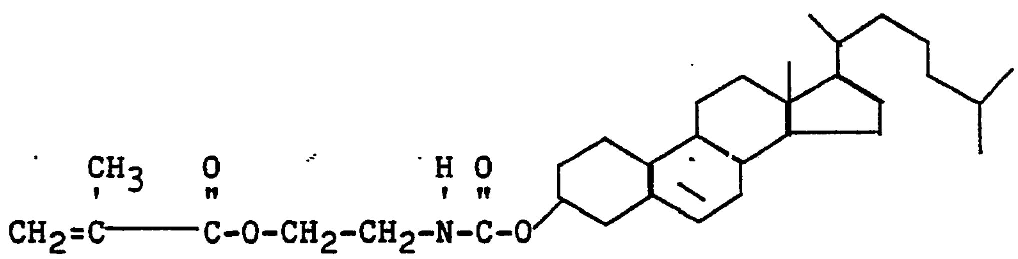

A 2-gram portion of the monomer was dispersed in 20 ml toluene and placed in a 100 ml flask under a nitrogen pad. To this mixture was added 0.04 g (0.02% by weight based on monomer) of azobis(isobutyronitrile). The temperature of the flask was raised to 67°C for a period of four hours to effect polymerization. The flask was then cooled and the product polymer was precipitated in methanol, filtered and dried.

The dried polymer was examined on a Zeiss universal polarizing-light microscope equipped with a Mettler FP-82 hot stage. A phase change was seen at 240°C above which the polymer appeared as a birefringent fluid. A bluish phase characteristic of the cholesteric liquid crystalline state was observed at 257°C under crossed polars. From this observation, it was concluded that the polymer was liquid crystalline.

B. Preparation of Liquid Crystal Dispersion

Into a suitable reactor equipped with a nitrogen pad were mixed 23 grams of the monomer from part A and 295 grams of a 1650 equivalent weight ethylene oxide-capped poly(propylene oxide)(Polyol A). After thorough mixing, the temperature of the mixture was raised to 125°C. Separately, 150 grams of an IEM capped polyol was prepared by reacting IEM with Polyol A at a mole ratio of 0.374. Into the capped polyol was dissolved 0.6 gram of azobis(isobutyronitrile). The resulting solution was slowly added to the reactor over a one-hour period at a temperature of 125°C. Upon addition of the initiator solution, the reaction mixture became milky in appearance. Following complete addition of the initiator solution, the reaction mixture was heated for an additional 4 hours at 125°C. Following this period, the product was vacuum stripped to remove any volatile impurities. The product was a dispersion containing 5% of the liquid crystalline polymer.

C. Molded Foam Prepared from Liquid Crystal Dispersion

A molded flexible foam was prepared from the following formulation:

| Component | Parts by Weight |
|---|---|
| Liquid Crystal Dispersion[1] | 100 |
| Water | 3.8 |
| Silicone Surfactant[2] | 1.65 |
| Tertiary Amine Catalyst[3] | 0.24 |
| Catalyst A[4] | 0.12 |
| Organotin Catalyst B[5] | 0.0042 |
| Diethanol Amine | 1.7 |
| Toluene Diisocyanate[6] | 105 index |

1 From Example 1-B
2 Y-10184 silicone surfactant, sold by Union Carbide Corporation
3 bis(N,N-dimethylaminoethyl)amine
4 A 33 weight percent solution of triethylenediamine in dipropylene glycol
5 Dimethyltindilaurate
6 An 80/20 by weight mixture of the 2,4- and 2,6-isomers

The mixture exhibited a rise time of 35 seconds and a cure time of 6 minutes.

The properties of this foam (designated Foam Sample No. 1) are reported in Table 1 following.

Examples 2 and 3, and Comparative Run A

A molded foam was prepared as described in Example 1-C, except the liquid crystal dispersion was replaced with an equal weight of a conventional copolymer polyol containing 10% by weight dispersed styrene/acrylonitrile (70/30 weight ratio) particles. The properties of this foam (designated Comparative Sample No. A) are reported in Table 1 following.

Another molded foam (Sample No. 2) was prepared as described in Example 1-C, except a portion of the liquid crystal dispersion was replaced with a copolymer polyol containing dispersed styrene/acrylonitrile particles (70/30 weight ratio) so that the blended polyols contained 10% by weight dispersed SAN particles and 2.5% by weight dispersed liquid crystalline polymer. The properties of this foam are described in Table 1.

Molded foam Sample No. 3 was prepared as described in Example 1-C, except a portion of the liquid crystal-containing polyol was replaced with a copolymer polyol containing dispersed styrene/acrylonitrile particles (70/30 weight ratio) so that the blended polyols contained 10% by weight dispersed SAN particles and 3% by weight dispersed liquid crystalline polymer. The properties of this foam are described in Table 1.

As can be seen from the data in Table 1, the use of even very small amounts of a liquid crystalline polymer provides a substantial increase in modulus.

TABLE 1

| Property | Examples and Comparative Run 1 | A | 2 | 3 |
|---|---|---|---|---|
| % LPC | 5 | 0 | 2.5 | 3.0 |
| % CPP solids | 0 | 10 | 10 | 10 |
| Density, lb/ft$^3$ (kg/m$^3$) | 1.88 (30.1) | 1.87 (29.9) | 1.93 (30.9) | 1.94 (31.1) |
| Tensile Str, psi (MPa) | 17.1 (0.12) | 22.8 (0.16) | 22.5 (0.15) | 22.1 (0.15) |
| Elongation, % | 111 | 107 | 114 | 103 |
| Tear Str, pli (kN/m) | 1.59 (0.28) | 1.81 (0.32) | 1.57 (0.27) | 1.90 (0.33) |
| Resiliency, % | 55 | 55 | 53 | 48 |
| % Compression Set | | | | |
| $C_t$ | 6.6 | 6.6 | 8.0 | 8.5 |
| $C_d$ | 12.9 | 13.1 | 15.6 | 16.7 |
| ILD | | | | |
| 25% | 18 | 22 | 24 | 24 |
| 65% | 50 | 53 | 65 | 69 |
| ret 25% | 15 | 17 | 20 | 18 |
| Modulus | 2.78 | 2.41 | 2.71 | 2.88 |
| Air flow, ft$^3$/min (m$^3$/s) | 4.3 (0.0020) | 4.8 (0.0022) | 4.6 (0.0022) | 4.4 (0.0021) |

Example 4 and Comparative Run B

Molded foam Sample No. 4 was prepared according to the general process described in Example 1-C. The polyols used were a blend of a liquid crystal dispersion and a copolymer polyol. This blend was substituted on a weight for weight basis for the liquid crystal dispersion used in Example 1-C. The liquid crystal polymer which was prepared as described in Example 1-B was of lower molecular weight and was therefore soluble in Polyol A. The copolymer polyol was prepared according to the general process described in US-A 4 745 153.

The copolymer polyol was prepared by capping Polyol A with 0.161 moles of IEM per mole of polyol, and copolymerizing the capped polyol with a small portion of styrene and acrylonitrile to form a stabilizer compound which was soluble in additional polyol. A solution of the capped polyol in an additional amount of Polyol A was then used as the base polyol in which additional styrene and acrylonitrile were polymerized in a 70/30 weight ratio to form a copolymer polyol having 35% solids. In making the foam, the copolymer polyol and liquid crystal dispersion were blended at ratios such that the blend had an overall content of dispersed SAN particles of 10% by weight, and contained 3.5% by weight of the liquid crystal polymer. The properties of this foam were as indicated in Table 2 following.

For comparison, a molded foam was prepared in like manner, except the sole polyol used was the copolymer polyol described with respect to Sample No. 4, diluted with Polyol A to 10% solids by weight. The properties of this foam (designated Comparative Sample B) are as described in Table 2 following.

TABLE 2

| Property | Examples and Comparative Run B | 4 |
|---|---|---|
| % LCP | 0 | 3.5 |
| % CPP solids | 10 | 10 |
| Density, $lb/ft^3$ ($kg/m^3$) | 1.91 (30.6) | 2.01 (32.2) |
| Tensile Str, psi (MPa) | 20.3 (0.14) | 24.3 (0.17) |
| Elongation, % | 102 | 107 |
| Tear Str, pli (kN/m) | 1.85 (0.32) | 1.93 (0.34) |
| Resiliency, % | 55 | 52 |
| % Compression Set | | |
| $C_t$ | 6.6 | 7.5 |
| $C_d$ | 12.8 | 14.7 |
| ILD | | |
| 25% | 23 | 25 |
| 65% | 60 | 71 |
| ret 25% | 19 | 20 |
| Modulus | 2.61 | 2.84 |
| Air flow, $ft^3/min$ ($m^3/s$) | 5.6 (0.0026) | 4.2 (0.0020) |

Improved modulus, tensile strength, elongation, ILD and resilience are seen with the addition of a liquid crystalline polymer.

Example 5 and Comparative Runs C and D

Molded foam Sample No. 5 was prepared in the same manner as Sample No. 4, except it contained only 2.6% by weight of dissolved liquid crystalline polymer. Its properties are as reported in Table 3 following.

As a further check on the beneficial effects of using a liquid crystal dispersion, a parallel experiment was run, substituting a different, nonmesogenic, soluble addition polymer for the liquid crystalline polymer. As such polymer was used a preformed stabilizer as described with respect to the preparation of the copolymer polyol in Example 2, except the capping level was only 0.06 moles/mole. This preformed stabilizer was present at a 2.6% by weight level. The properties of this molded foam (designated Comparative Sample C) are as reported in Table 3 following.

For comparison, the properties of Comparative Foam D, made from a copolymer polyol containing 10% solids prepared by polymerizing styrene and acrylonitrile in Polyol A in the presence of the preformed stabilizer used to prepare Comparative Sample C, are reported in Table 3.

The data in Table 3 shows that excellent foam having in particular improved modulus, tensile strength and ILD is prepared according to this invention. The use of the soluble, nonmesogenic polymer does not provide ILD and modulus improvements.

TABLE 3

| Property | C | D | 5 |
|---|---|---|---|
| | Examples and Comparative Runs | | |
| % LCP | 0 | 0 | 2.6 |
| % CPP solids | 0 | 10 | 0 |
| Density, $lb/ft^3$ ($kg/m^3$) | 1.91 (30.6) | 1.98 (31.7) | 2.08 (33.3) |
| Tensile Str, psi (MPa) | 20.9 (0.14) | 19.5 (0.13) | 25.1 (0.173) |
| Elongation, % | 98 | 91 | 96 |
| Tear Str, pli (kN/m) | 2.12 (0.37) | 1.95 (0.33) | 1.40 (0.25) |
| Resiliency, % | 52 | 53 | 52 |
| % Compression Set | | | |
| $C_t$ | 5.9 | 5.0 | 6.0 |
| $C_d$ | 11.6 | 9.7 | 11.8 |
| ILD | | | |
| 25% | 26 | 25 | 25 |
| 65% | 64 | 64 | 71 |
| ret 25% | 20 | 20 | 20 |
| Modulus | 2.46 | 2.56 | 2.84 |
| Air flow, $ft^3$/min ($m^3$/s) | 4.3 (0.0022) | 5.2 (0.0024) | 2.2 (0.0010) |

Example 6 and Comparative Run E

A. Preparation of Liquid Crystal Dispersion

Into a suitable reactio were placed 65 parts of Polyol A, 119 parts of the IEM-capped polyol described in Example 1-B, and 12.8 parts of a liquid crystalline monomer having the structure

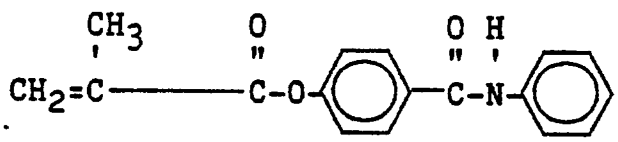

which was separately prepared by reacting methacryloyl chloride with the reaction product of phenylisocyanate and para-hydroxy benzoic acid. This mixture was heated to 140°C and to it were added at that temperature, over a period of one hour, a mixture of 119 parts of the IEM-capped polyol and 0.65 grams azobis(isobutyronitrile). Following complete addition of the initiator solution, the reaction mixture was heated at 140°C for an additional 4 hours. The resulting product was a solution of a polymer of the liquid crystalline monomer in Polyol A.

Six parts of this solution were placed in a reactor along with 14.91 parts of the liquid crystalline monomer and 108 parts of Polyol A. This mixture was heated to a temperature of 140°C, upon which the solid monomer melted. Then 23 parts of Polyol A containing 0.6 part of azobis(isobutyronitrile) and 2.8 parts of a solution of the liquid crystalline polymer in Polyol A were added over a period of about 30 minutes at 140°C. Following this addition, the mixture was heated for another 30 minutes and cooled. The resulting product was a dispersion of particles of a liquid crystalline polymer in Polyol A.

B. Preparation of Polyurethane Foam

A molded, high resiliency foam (Sample No. 6) was prepared using the formulation described in Example 1-C, except the liquid crystalline dispersion was replaced by a mixture of Polyol A, the liquid crystalline dispersion of Example 5-A, and a copolymer polyol as described with respect to Sample No. 4, except the styrene/acrylonitrile ratio was 80/20. The proportions of these components were such that the mixture contained 10% by weight SAN particles and 2.6% by weight liquid crystalline polymer particles.

For comparison, a molded foam (Comparative Sample E) was prepared using the same formulation, except that the liquid crystalline dispersion of Example 1-C was replaced with the 10% solids copolymer polyol described with respect to Comparative Sample B. The properties of Sample No. 6 and Comparative Sample E are as reported in Table 4 following.

TABLE 4

| Property | Examples and Comparative Run E | 6 |
|---|---|---|
| % LCP | 0 | 2.6 |
| % CPP solids | 10 | 10 |
| Density, lb/ft$^3$ (kg/m$^3$) | 1.87 (29.9) | 2.09 (33.5) |
| Tensile Str, psi (MPa) | 22.8 (0.16) | 21.3 (0.15) |
| Elongation, % | 107 | 139 |
| Tear Str, pli (kN/m) | 1.81 (0.32) | 2.42 (0.42) |
| Resiliency, % | 55 | 47 |
| % Compression Set $C_d$ | 13.1 | 20.9 |
| ILD | | |
| 25% | 22 | 21 |
| 65% | 53 | 64 |
| ret 25% | 17 | 16 |
| Modulus | 2.41 | 3.05 |
| Air flow, ft$^3$/min (m$^3$/s) | 4.8 (0.0022) | 5.7 (0.0027) |

As can be seen from the data in Table 4, very substantial increase in modulus and 65% ILD was obtained with the presence of a small quantity of liquid crystal polymer in the foam formulation.

Example 7

Into a suitable reactor were added 789 parts of a mixture of 10% hydroxypropylcellulose (HPC, molar substitution 3.0, molecular weight 60,000) and 90% of an adduct of glycerine and 5.7 moles of ethylene oxide. HPC is known to exhibit a thermotropic liquid crystalline state between 160–205°C. To this mixture was added 31.6 parts of a 45% aqueous solution of potassium hydroxide, and the water was flashed off. The mixture was heated to 120°C, and a mixture of 807 parts ethylene oxide and 5404 parts propylene oxide were added to the reactor at a rate of 10 grams/minute. Following addition of the oxides, the reaction mixture was digested for 4 hours at 120°C. The resulting liquid crystalline polyol was treated with magnesium silicate and filtered. It was a clear solution having an equivalent weight of 1049.

A flexible polyurethane foam was prepared by mixing 100 parts of this liquid crystalline polyol, 1.5 parts of a silicone surfactant, 0.2 parts of an organometallic catalyst, 0.15 parts of a 33% triethylenediamine solution and toluene diamine at a 105 index, and pouring the mixture into a cup where it was permitted to rise. After the rise was complete, the foam was cured at 250°F (120°C) for 30 minutes. A good quality foam was obtained.

**Claims for the Contracting States: BE, CH, DE, ES, FR, GB, IT, LI, NL, SE**

1. A solution or colloidal dispersion of a liquid crystalline polymer in an active hydrogen-containing compound having an average of at least two active hydrogen-containing moieties.

2. A solution or colloidal dispersion of a polymer in an active hydrogen-containing compound having an average of at least two active hydrogencontaining moieties, said polymer comprising a polymerized monomer selected from

(a) monomers containing ethylenic unsaturation and an internal grouping having the structure:

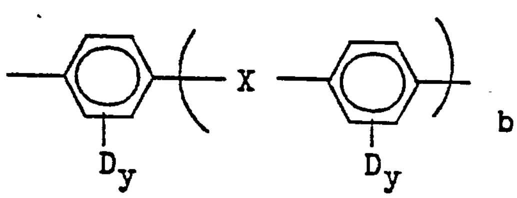

(I)

wherein b is a number from 1 to 10, preferably from 1 to 3, D is hydrogen, lower alkyl or halogen, y is 0, 1, 2, 3 or 4 and X represents a linkage which is capable of participating in conjugation with the aromatic

rings such as, for example,

O

↑

-N=N-, -N=N-, -COO-, -C=C-,

-N=C-, -NCO- and -NCOO-;

(b) ethylenically unsaturated benzoic acid derivatives represented by the structure

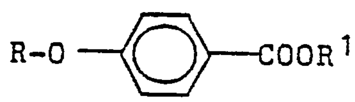

(II)

wherein R represents an inertly substituted radical having polymerizable ethylenic unsaturation and $R^1$ represents hydrogen or an inertly substituted organic radical;

(c) ethylenically unsaturated styrene Schiff base derivatives represented by the structure

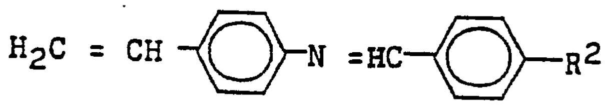

(III)

wherein $R^2$ is a cyano, halogen, straight chain alkyl ether, phenyl, cyclohexyl or $-CH{=}CHCOOR^3$ radical, wherein $R^3$ is a straight chain alkyl, acetyl, carboxylic acid or ester group or amido groups;

(d) ethylenically unsaturated acryloyl or methacryloyl Schiff base derivatives represented by the structure

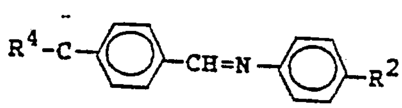

(IV)

wherein $R^2$ is as defined before and $R^4$ is $CH_2{=}CH-$ or $CH_2{=}C(CH_3)-$; or

(e) ethylenically unsaturated steroid derivatives represented by the structure

R–Y–A (V)

wherein A represents

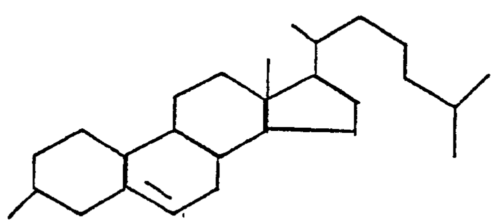

or

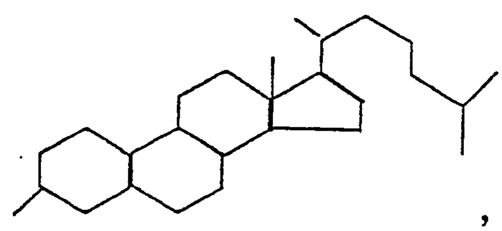

,

Y represents –COO– or –N–COO–,

R is $CH_2{=}CH-$, $CH_2{=}C(CH3)-$,

trans $-CH_3CH{=}CH-$, or

$CH_2{=}CH(CH_2)x-$, wherein x is a number from 1 to 10, or a straight chain mono or polyunsaturated hydrocarbyl group.

3. A solution or dispersion as claimed in Claim 1 or Claim 2 wherein the active hydrogen-containing compound contains at least two hydroxyl groups or two primary or secondary amine groups per molecule.

4. A solution or dispersion as claimed in any one of the preceding claims wherein said polymer is dissolved or colloidally dispersed in the active hydrogen-containing compound, and the solution contains from 1 to 80 parts of the polymer per 100 parts of active hydrogen-containing compound.

5. A solution or dispersion as claimed in Claim 4 wherein the active hydrogen-containing compound comprises a polyether polyol having an average equivalent weight of from 800 to 3000 and an average functionality of from 2 to 4 and a glycol or aromatic amine chain extender.

6. A solution as claimed in Claim 4 wherein the active hydrogen-containing compound has an average

equivalent weight of from 31 to 400 and an average functionality of from 3 to 8.

7. A solution or dispersion as claimed in any one of the preceding claims wherein said polymer is a polymer of the reaction product of an unsaturated isocyanate and cholesterol.

8. A polyurethane and/or polyurea polymer prepared by reacting a polyisocyanate with the solution or colloidal dispersion as claimed in any one of the preceding claims.

9. A crosslinked, noncellular or microcellular polyurethane and/or polyurea polymer containing a polymer comprising a polymerized monomer selected from the group consisting of

(a) monomers containing ethylenic unsaturation and an internal grouping having the structure:

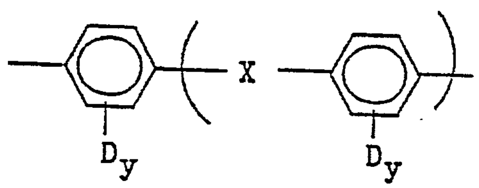 (I)

wherein b is a number from 1 to 10, preferably from 1 to 3, D is hydrogen, lower alkyl or halogen, y is 0, 1, 2, 3 or 4 and X represents a linkage which is capable of participating in conjugation with the aromatic rings such as, for example,

O
↑
-N=N-, -N=N-, -COO-, -C=C-,
-N=C-, -NCO- and -NCOO-;

(b) ethylenically unsaturated benzoic acid derivatives represented by the structure

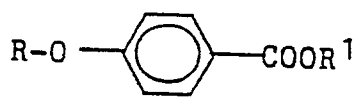 (II)

wherein R represents an inertly substituted radical having polymerizable ethylenic unsaturation and $R^1$ represents hydrogen or an inertly substituted organic radical;

(c) ethylenically unsaturated styrene Schiff base derivatives represented by the structure

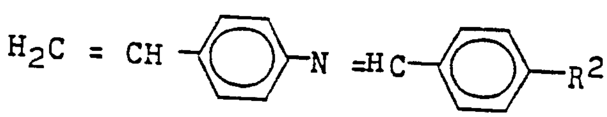 (III)

wherein $R^2$ is a cyano, halogen, straight chain alkyl ether, phenyl, cyclohexyl or $-CH{=}CHCOOR^3$ radical, wherein $R^3$ is a straight chain alkyl, acetyl, carboxylic acid or ester group or amido groups;

(d) ethylenically unsaturated acryloyl or methacryloyl Schiff base derivatives represented by the structure

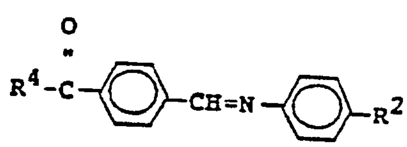 (IV)

wherein $R^2$ is as defined before and $R^4$ is $CH_2{=}CH-$ or $CH_2{=}C(CH_3)-$; or

(e) ethylenically unsaturated steroid derivatives represented by the structure

R–Y–A (V)

wherein

A represents

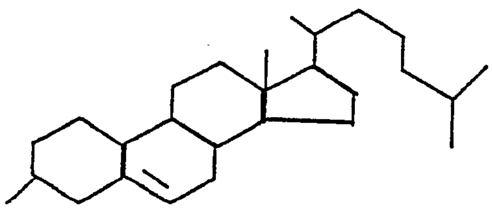 or 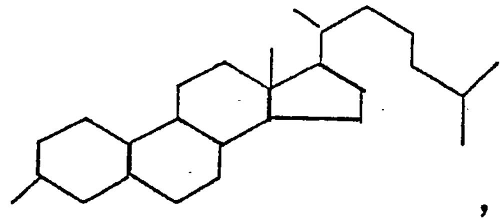 ,

y represent –COO– or –N–COO–,
R is $CH_2$=CH–, $CH_2$=C($H_3$)–,
trans –$CH_3$CH=CH–, or
$CH_2$=CH($CH_2$)x–, wherein x is a number from 1 to 10, or a straight chain mono or polyunsaturated hydrocarbyl group.

**Claims for the Contracting State: AT**

1. A solution or colloidal dispersion of a liquid crystalline polymer in an active hydrogen-containing compound having an average of at least two active hydrogen-containing moieties.

2. A solution or colloidal dispersion of a polymer in an active hydrogen-containing compound having an average of at least two active hydrogen-containing moieties, said polymer comprising a polymerized monomer selected from

(a) monomers containing ethylenic unsaturation and an internal grouping having the structure:

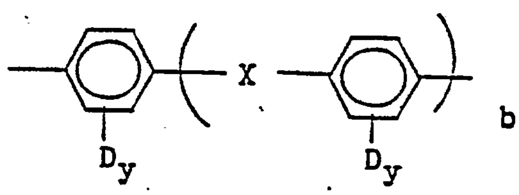 (I)

wherein b is a number from 1 to 10, preferably from 1 to 3, D is hydrogen, lower alkyl or halogen, y is 0, 1, 2, 3 or 4 and X represents a linkage which is capable or participating in conjugation with the aromatic rings such as, for example,

O
↑
-N=N-, -N=N-, -COO-, -C=C-,
-N=C-, -NCO- and -NCOO-;

(b) ethylenically unsaturated benzoic acid derivatives represented by the structure

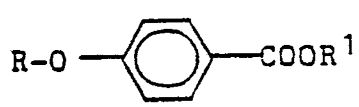 (II)

wherein R represents an inertly substituted radical having polymerizable ethylenic unsaturation and $R^1$ represents hydrogen or an inertly substituted organic radical;

(c) ethylenically unsaturated styrene Schiff base derivatives represented by the structure

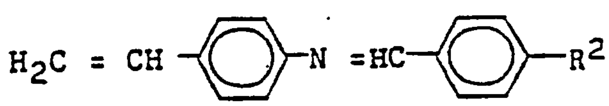 (III)

wherein $R^2$ is a cyano, halogen, straight chain alkyl ether, phenyl, cyclohexyl or –CH=CHCOO$R^3$ radial, wherein $R^3$ is a straight chain alkyl, acetyl, carboxylic acid or ester group or amido groups;

(d) ethylenically unsaturated acryloyl or methacryloyl Schiff base derivatives represented by the structure

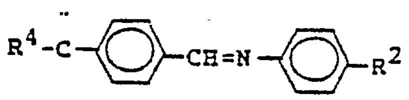 (IV)

wherein $R^2$ is as defined before and $R^4$ is $CH_2{=}CH-$ or $CH_2{=}C(CH_3)-$; or
(e) ethylenically unsaturated steroid derivatives represented by the structure
R–Y–A (V)
wherein A represents

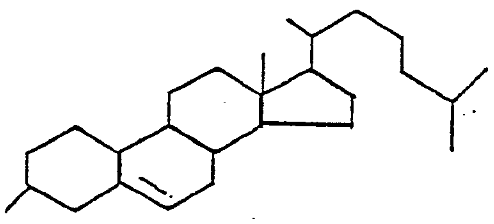 or 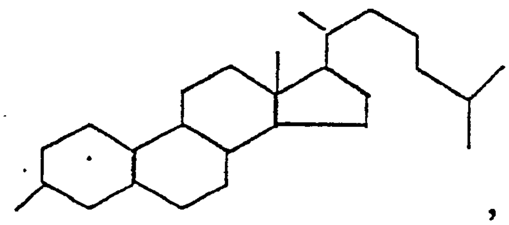 ,

Y represents –COO– or –N–COO–
R is $CH_2{=}CH-$, $CH_2{=}C(CH_3)-$, trans $-CH_3CH{=}CH-$, or
$CH_2{=}CH(CH_2)x-$, wherein x is a number from 1 to 10, or straight chain mono or polyunsaturated hydrocarbyl group.

3. A solution or dispersion as claimed in Claim 1 or Claim 3 wherein the active hydrogen-containing compound contains at least two hydroxyl groups or two primary or secondary amine groups per molecule.

4. A solution or dispersion as claimed in any one of the preceding claims wherein said polymer is dissolved or colloidally dispersed in the active hydrogen-containing compound, and the solution contains from 1 to 80 parts of the polymer per 100 parts of active hydrogen-containing compound.

5. A solution or dispersion as claimed in Claim 4 wherein the active hydrogen-containing compound comprises a polyether polyol having an average equivalent weight of from 800 to 3000 and in average functionality of from 2 to 4 and a glycol or aromatic amine chain extender.

6. A solution as claimed in Claim 4 wherein the active hydrogen-containing compound has an average equivalent weight of from 31 to 400 and an average functionality of from 3 to 8.

7. A solution or dispersion as claimed in any one of the preceding claims wherein said polymer is a polymer of the reaction product of an unsaturated isocyanate and cholesterol.

8. Process for preparing a polyurethane and/or polyurea polymer characterized by reacting a polyisocyanate with the solution or colloidal dispersion as claimed in any one of the preceding claims.

**Patentansprüche für die Vertragsstaaten: BE, CH, DE, ES, FR, GB, IT, LI, NL, SE**

1. Lösung oder kolloidale Dispersion eines flüssigkristallinen Polymers in einer, aktiven Wasserstoff enthaltenden Verbindung, die durchschnittlich mindestens zwei, aktiven Wasserstoff enthaltende Gruppen besitzt.

2. Lösung oder kolloidale Dispersion eines Polymers in einer, aktiven Wasserstoff enthaltenden Verbindung, die durchschnittlich mindestens zwei, aktiven Wasserstoff enthaltende Gruppen enthält, wobei das Polymer ein polymerisiertes Monomer umfaßt, ausgewählt aus

(a) Monomeren, die ethylenisch ungesättigt sind und eine innere Gruppierung mit der Struktur:

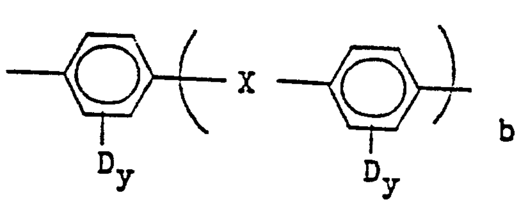 (I)

enthalten, worin b eine Zahl von 1 bis 10, vorzugsweise von 1 bis 3 ist, D Wasserstoff, niederes Alkyl oder Halogen bedeutet, y 0, 1, 2, 3 oder 4 ist und X eine Bindung darstellt, welche in der Lage ist, an der Konjugation mit den aromatischen aingen teilzunehmen, wie etwa z.B.

$-N=N-$, $-\overset{O\atop\uparrow}{N}=N-$, $-COO-$, $-C=C-$, $-N=C-$, $-NCO-$ und $-\dot{N}COO-$;

(b) ethylenisch ungesättigten Benzoesäure-Derivaten, dargestellt durch die Struktur

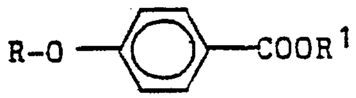
(II)

worin R einen inert substituierten Rest mit polymerisierbarer ethylenischer Unsättigung darstellt und $R^1$ Wasserstoff oder einen inert substituierten organischen Rest darstellt;

(c) ethylenisch ungesättigten Styrol-Schiffbasen-Derivaten, dargestellt durch die Struktur

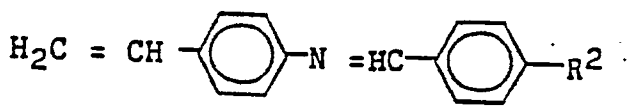
(III)

worin $R^2$ ein Cyan-, Halogen-, geradkettiger Alkylether-, Phenyl-, Cyclohexyl- oder $-CH=CHCOOR^3$-Rest ist, worin $R^3$ geradkettiges Alkyl ist, Acetyl-, Carbonsäure- oder Estergruppe oder Amidogruppen ist,

(d) ethylenisch ungesättigten Acryloyl- oder Methacryloyl-Schiffbasen-Derivaten, dargestellt durch die Struktur

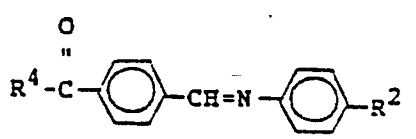
(IV)

worin $R^2$ wie zuvor definiert ist und $R^4$ $CH_2=CH-$ oder $CH_2=C(CH_3)-$ ist oder

(e) ethylenisch ungesättigten Steroidderivaten, dargestellt durch die Struktur

R–Y–A (V)

worin A

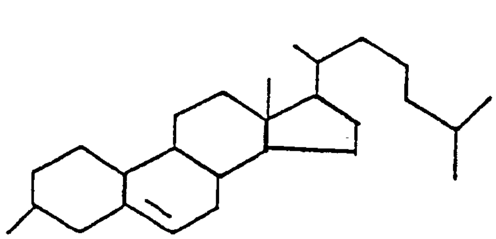
oder
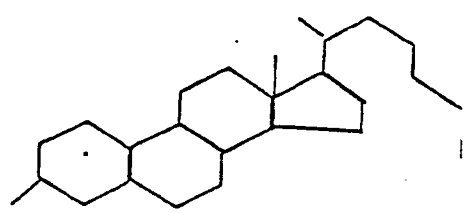

bedeutet, Y –COO– oder –N–COO– bedeutet,
R $CH_2=CH-$, $CH_2=C(CH_3)-$,
trans $-CH_3CH=CH-$ oder
$CH_2=CH(CH_2)x-$, worin x eine Zahl von 1 bis 10 ist oder eine geradkettige einfach oder mehrfach ungesättigte Kohlenwasserstoffkette bedeutet.

3. Lösung oder Dispersion nach Anspruch 1 oder 2, worin die, aktiven Wasserstoff enthaltende Verbindung mindestens zwei Hydroxylgruppen oder zwei primäre oder sekundäre Amingruppen pro Molekül enthält.

4. Lösung oder Dispersion nach einem der vorhergehenden Ansprüche, worin das Polymer in der, aktiven Wasserstoff enthaltenden Verbindung gelöst oder kolloidal dispergiert ist, und die Lösung von 1 bis 80 Teile des Polymers auf 100 Teile der, aktiven Wasserstoff enthaltenden Verbindung enthält.

5. Lösung oder Dispersion nach Anspruch 4, worin die, aktiven Wasserstoff enthaltende Verbindung ein Polyetherpolyol mit einem durchschnittlichen Äquivalenzgewicht von 800 bis 3000 und einer durchschnittlichen Funktionalität von 2 bis 4 und ein Glykol oder aromatisches Amin als Kettenverlängerungsmittel enthält.

6. Lösung nach Anspruch 4, worin die, aktiven Wasserstoff enthaltende Verbindung ein durchschnittliches Äquivalenzgewicht von 31 bis 400 besitzt und eine durchschnittliche Funktionalität von 3 bis 8 besitzt.

7. Lösung oder Dispersion nach einem der vorhergehenden Ansprüche, worin das Polymer ein Polymer aus dem Reaktionsprodukt eines ungesättigten Isocyanats und Cholesterin ist.

8. Polyurethan- und/oder Polyharnstoffpolymer, hergestellt durch Reaktion eines Polyisocyanats mit der Lösung oder kolloidalen Dispersion nach einem der vorhergehenden Ansprüche.

9. Quervernetztes, nichtzelliges oder mikrozelliges Polyurethan- und/oder Polyharnstoffpolymer, enthaltend ein Polymer, das ein polymerisiertes Monomer enthält, ausgewählt aus der Gruppe, bestehend aus

(a) Monomeren mit ethylenischer Unsättigung und einer inneren Gruppierung mit der Struktur:

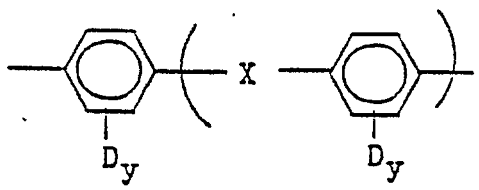

(I)

worin b eine Zahl von 1 bis 10, vorzugsweise von 1 bis 3 ist, D Wasserstoff, niederes Alkyl oder Halogen ist, y 0, 1, 2, 3 oder 4 ist und X eine Bindung bedeutet, die in der Lage ist, an der Konjugation mit den aromatischen Ringen teilzunehmen wie etwa z.B.

-N=N-, 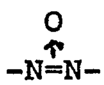, -COO-, -C=C-, -N=C-, -NCO- und -NCOO-;

(b) ethylenisch ungesättigten Benzoesäure-Derivaten, dargestellt durch die Struktur

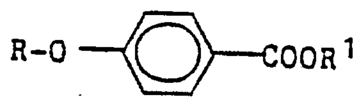

(II)

worin R einen inert substituierten Rest mit polymerisierbarer ethylenischer Unsättigung bedeutet und $R^1$ Wasserstoff oder einen inert substituierten organischen Rest bedeutet;

(c) ethylenisch ungesättigten Styrol-Schiffbasen-Derivaten, dargestellt durch die Struktur

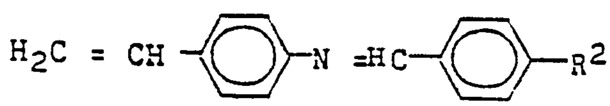

(III)

worin $R^2$ ein Cyan-, Halogen-, geradkettiger Alkylether-, Phenyl-, Cyclohexyl- oder $-CH{=}CHCOOR^3$-Rest ist, worin $R^3$ geradkettiges Alkyl ist, Acetyl-, Carbonsäure- oder Estergruppe oder Amidogruppen ist;

(d) ethylenisch ungesättigten Acryloyl- oder Methacryloyl-Schiffbasen-Derivaten, dargestellt durch die Struktur

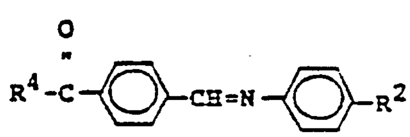

(IV)

worin $R^2$ wie zuvor definiert ist und $R^4$ $CH_2{=}CH-$ oder $CH_2{=}C(CH_3)-$ ist oder

(e) ethylenisch ungesättigten Steroidderivaten, dargestellt durch die Struktur worin A

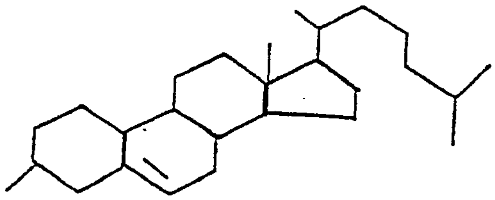 oder 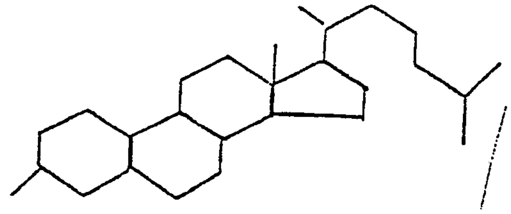

bedeutet,
Y –COO– oder –N–COO- bedeutet,
R $CH_2=CH-$, $CH_2=C(CH_3)-$,
trans $-CH_3CH=CH-$, oder $CH_2=CH(CH_2)x-$, worin x eine Zahl von 1 bis 10 ist, oder eine geradkettige einfach oder mehrfach ungesättigte Kohlenwasserstoffgruppe ist.

**Patentansprüche für den Vertragsstaat: AT**

1. Lösung oder kolloidale Dispersion eines flüssigkristallinen Polymers in einer, aktiven Wasserstoff enthaltenden Verbindung, die durchschnittlich mindestens zwei, aktiven Wasserstoff enthaltende Gruppen besitzt.

2. Lösung oder kolloidale Dispersion eines Polymers in einer, aktiven Wasserstoff enthaltenden Verbindung, die durchschnittlich mindestens zwei, aktiven Wasserstoff enthaltende Gruppen enthält, wobei das Polymer ein polymerisiertes Monomer umfaßt, ausgewählt aus

(a) Monomeren, die ethylenisch ungesättigt sind und eine innere Gruppierung mit der Struktur:

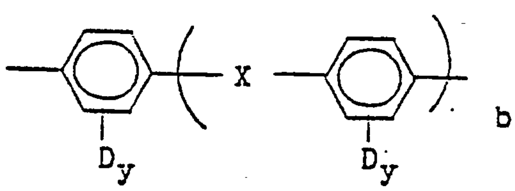 (I)

enthalten, worin b eine Zahl von 1 bis 10, vorzugsweise von 1 bis 3 ist, D Wasserstoff, niederes Alkyl oder Halogen bedeutet, y 0, 1, 2, 3 oder 4 ist und X eine Bindung darstellt, welche in der Lage ist, an der Konjugation mit den aromatischen Ringen teilzunehmen, wie etwa z.B.

$$-N=N-,\quad -\overset{\overset{O}{\uparrow}}{N}=N-,\quad -COO-,\quad -C=C-,\quad -N=C-,\quad -NCO-\ \text{und}\ -NCOO-;$$

(b) ethylenisch ungesättigten Benzoesäure-Derivaten, dargestellt durch die Struktur

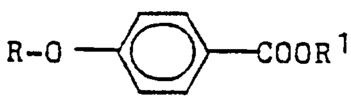 (II)

worin R einen inert substituierten Rest mit polymerisierbarer ethylenischer Unsättigung darstellt und $R^1$ Wasserstoff oder einen inert substituierten organischen Rest darstellt;

(c) ethylenisch ungesättigten Styrol-Schiffbasen-Derivaten, dargestellt durch die Struktur

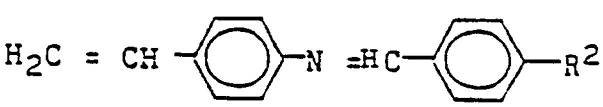 (III)

worin $R^2$ ein Cyan-, Halogen-, geradkettiger Alkylether-, Phenyl-, Cyclohexyl- oder $-CH=CHCOOR^3$-Rest ist, worin $R^3$ geradkettiges Alkyl ist, Acetyl-, Carbonsäure- oder Estergruppe oder Amidogruppen ist,

(d) ethylenisch ungesättigten Acryloyl- oder Methacryloyl-Schiffbasen-Derivaten, dargestellt durch die Struktur

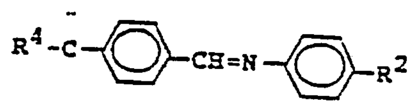
(IV)

worin $R^2$ wie zuvor definiert ist und $R^4$ $CH_2$=CH- oder $CH_2$=C($CH_3$)– ist oder
(e) ethylenisch ungesättigten Steroidderivaten, dargestellt durch die Struktur
R–Y–A (V)
worin A

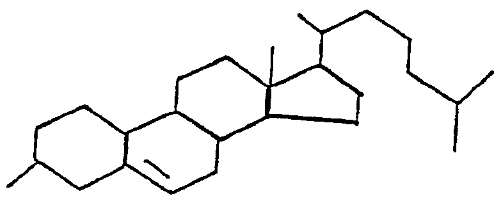
oder
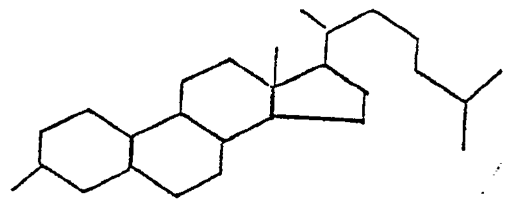

bedeutet, Y –COO– oder –N–COO– bedeutet, R $CH_2$=CH–, $CH_2$=C($CH_3$)–, trans –$CH_3$CH=CH– oder $CH_2$=CH($CH_2$)x–, worin x eine Zahl von 1 bis 10 ist, oder eine geradkettige einfach oder mehrfach ungesättigte Kohlenwasserstoffkette bedeutet.

3. Lösung oder Dispersion nach Anspruch 1 oder 2, worin die, aktiven Wasserstoff enthaltende Verbindung mindestens zwei Hydroxylgruppen oder zwei primäre oder sekundäre Amingruppen pro Molekül enthält.

4. Lösung oder Dispersion nach einem der vorhergehenden Ansprüche, worin das Polymer in der, aktiven Wasserstoff enthaltenden Verbindung gelöst oder kolloidal dispergiert ist, und die Lösung von 1 bis 80 Teile des Polymers auf 100 Teile der, aktiven Wasserstoff enthaltenden Verbindung enthält.

5. Lösung oder Dispersion nach Anspruch 4, worin die, aktiven Wasserstoff enthaltende Verbindung ein Polyetherpolyol mit einem durchschnittlichen Äquivalenzgewicht von 800 bis 3000 und einer durchschnittlichen Funktionalität von 2 bis 4 und ein Glykol oder aromatisches Amin als Kettenverlängerungsmittel enthält.

6. Lösung nach Anspruch 4, worin die, aktiven Wasserstoff enthaltende Verbindung ein durchschnittliches Äquivalenzgewicht von 31 bis 400 und eine durchschnittliche Funktionalität von 3 bis 8 besitzt.

7. Lösung oder Dispersion nach einem der vorhergehenden Ansprüche, worin das Polymer ein Polymer aus dem Reaktionsprodukt eines ungesättigten Isocyanats und Cholesterin ist.

8. Verfahren zur Herstellung eines Polyurethan- und/oder Polyharnstoff-Polymers, dadurch gekennzeichnet, daß man ein Polyisocyanat mit der Lösung oder kolloidalen Dispersion nach einem der vorhergehenden Ansprüche umsetzt.

**Revendication pour les Etats contractants: BE, CH, DE, ES, FR, GB, IT, LI, NL, SE**

1. Solution ou dispersion colloïdale d'un polymère cristallin liquide dans un composé contenant de l'hydrogène actif ayant une moyenne d'au moins deux fragments contenant de l'hydrogène actif.

2. Solution ou dispersion colloïdale d'un polymère dans un composé contenant de l'hydrogène actif, ayant une moyenne d'au moins deux fragments contenant de l'hydrogène actif, ledit polymère comprenant un monomère polymérisé choisi parmi

a) des monomères contenant une insaturation éthylénique et un groupement interme possèdant la structure:

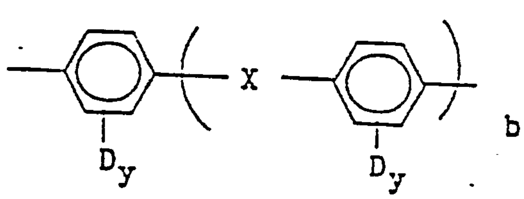
(I)

dans laquelle b est un nombre valant de 1 à 10, de préférence de 1 à 3, D est un atome d'hydrogène, un groupe alkyle inférieure ou un atome d'halogène, y vaut 0, 1, 2, 3, ou 4 et X représente un pont qui est capable de participer à une conjugaison avec les noyaux aromatiques, tel que par exemple,

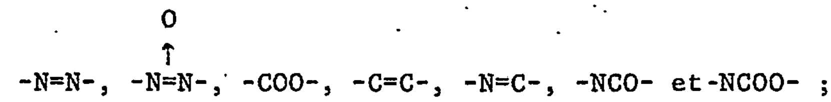

b) des dérivés de l'acide benzoïque, à insaturation éthylénique, représentés par la structure

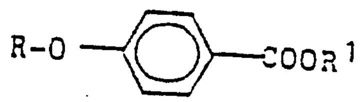 (II)

dans laquelle R représente un radical à substituant(s) inerte(s), ayant une insaturation éthylénique polymérisable et $R^1$ représente un atome d'hydrogène ou un radical organique à substituant(s) inerte(s);
c) des dérivés bases de Schiff, styréniques à insaturation éthylénique, représentés par la structure

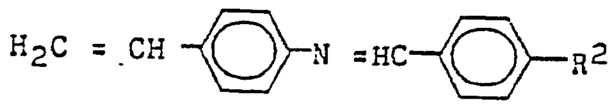 (III)

dans laquelle $R^2$ représente un groupe cyano, un atome d'halogène, un groupe éther alkylique à chaîne linéaire, phényle, cyclohexyle ou $-CH=CHCOOR^3$, où $R^3$ est un groupe alkyle à chaîne linéaire, acétyle, acide carboxylique ou un groupe ester ou des groupes amido;
d) des dérivés bases de Schiff, acroyle ou méthacroyle, à insaturation éthylènique, représentés par la structure

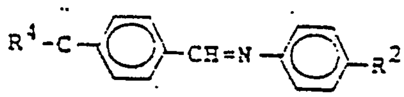 (IV)

dans laquelle $R^2$ est tel que défini précédemment et $R^4$ est $CH_2=CH-$ ou $CH_2=C(CH_3)-$, ou
e) des dérivés stéroïdes, à insaturation éthylénique, représentés par la structure
R–Y–A
dans laquelle A représente

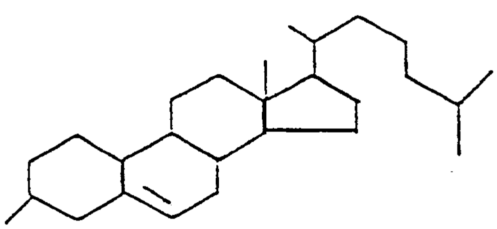 ou 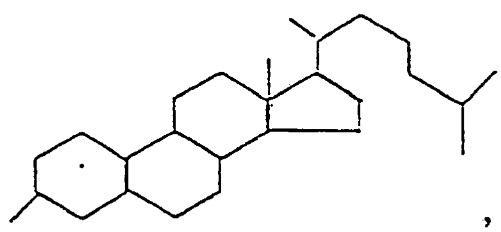 ,

Y représente –COO– ou –N–COO–,
R est $CH_2=CH-$, $CH_2=C(CH_3)-$, trans $-CH_3CH=CH-$ ou $CH_2=CH(CH_2)x-$, où x est un nombre valant de 1 à 10, ou un groupe hydrocarboné à chaîne linéaire, mono- ou polyinsaturé.

3. Solution ou dispersion selon la revendication 1 ou 2, dans laquelle le composé contenant de l'hydrogène actif contient au moins deux groupes hydroxyle ou deux groupes amine primaire ou secondaire par molécule.

4. Solution ou dispersion selon l'une quelconque des revendications précédentes, dans laquelle ledit polymère est dissous ou dispersé colloïdalement dans le composé contenant de l'hydrogène actif, et la solution contient de 1 à 80 parties du polymère pour 100 parties du composé contenant de l'hydrogène actif.

5. Solution ou dispersion selon la revendication 4, dans laquelle le composé contenant de l'hydrogène actif englobe un polyéther-polyol ayant un poids moyen d'équivalent compris entre 800 et 3000 et une fonctionnalité moyenne allant de 2 à 4 et un agent d'allongement de chaîne glycol ou amine aromatique.

6. Solution selon la revendication 4, dans laquelle le composé contenant de l'hydrogène actif possède un poids moyen d'équivalent allant de 31 à 400 et une fonctionnalité moyenne allant de 3 à 8.

7. Solution ou dispersion selon l'une quelconque des revendications précédentes, dans laquelle ledit polymère est un polymère du produit de réaction d'un isocyanate insaturé et du cholestérol.

8. Polymère polyuréthane et/ou polyurée préparé par réaction d'un polyisocyanate avec la solution ou la dispersion colloïdale selon l'une quelconque des revendications précédéntes.

9. Polymère réticulé, non cellulaire ou microcellulaire polyuréthane et/ou polyurée contenant un polymère comprenant un monomère polymérisé choisi dans le groupe comprenant

a) des monomères contenant une insaturation éthylénique et un groupement interne possèdant la structure:

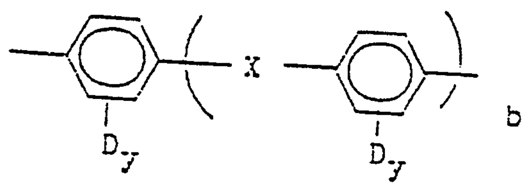

(I)

dans laquelle b est un nombre allant de 1 à 10, de préférence de 1 à 3, D est un atome d'hydrogène, un groupe alkyle inférieur ou un atome d'halogène, y vaut 0, 1, 2, 3 ou 4 et X représente un pont qui est capable de participer à une conjugaison avec les noyaux aromatiques, tel que par exemple

O
↑
-N=N-, -N=N-, -COO-, -C=C-, -N=C-, -NCO- et -NCOO- ;

b) des dérivés de l'acide benzoïde, à insaturation éthylénique, représentés par la structure

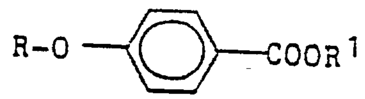

(II)

dans laquelle R représente un radical à substituant(s) inerte(s) ayant une insaturation éthylènique polymérisable et $R^1$ représente un atome d'hydrogène ou un radical organique à substituant(s) inerte(s);

c) des dérivés bases de Schiff, styréniques à insaturation éthylènique, représentés par la structure

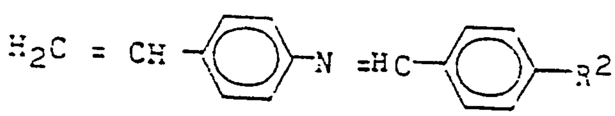

(III)

dans laquelle $R^2$ est un groupe cyano, un atome d'halogène, un groupe éther alkylique à chaîne linéaire, phényle, cyclohexyle ou $-CH=CHCOOR^3$ où $R^3$ est un groupe est un groupe alkyle à chaîne linéaire, acétyle, acide carboxylique ou un groupe ester ou des groupes amido;

d) des dérivés bases de Schiff, acroyle ou méthacroyle à insaturation éthylènique, représentés par la structure

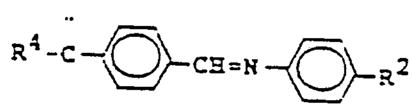

(IV)

dans laquelle $R^2$ est tel que défini précédemment et $R^4$ est $CH_2=CH-$ ou $CH_2=C(CH_3)-$; ou

e) des dérivés stéroïdes, à insaturation éthylènique, représentés par la structure

R–Y–A

dans laquelle A représente

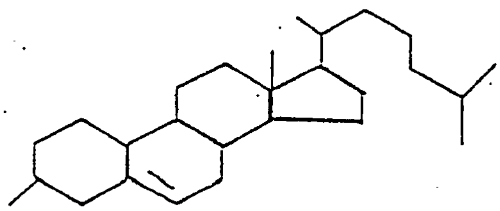

ou

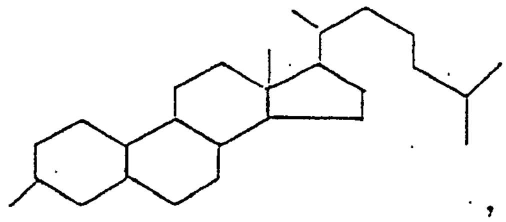

,

Y représent –COO– ou –N–COO–, R est $CH_2=CH–$, $CH_2=C(CH_3)–$, trans $–CH_3CH=CH–$, ou $CH_2=CH(CH_2)_x–$, où x est un nombre valant de 1 à 10, ou un groupe hydrocarboné à chaîne linéaire mono ou polyinsaturé.

**Revendication pour les Etats contractants: AT**

1. Solution ou dispersion colloïdale d'un polymère cristallin liquide dans un composé contenant de l'hydrogène actif ayant une moyenne d'au moins deux fragments contenant de l'hydrogène actif.

2. Solution ou dispersion colloïdale d'un polymère dans un composé contenant de l'hydrogène actif, ayant une moyenne d'au moins deux fragments contenant de l'hydrogène actif, ledit polymère comprenant un monomère polymérisé choisi parmi

a) des monomères contenant une insaturation éthylénique et un groupement interne possèdant la structure:

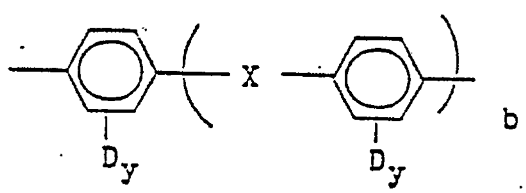

(I)

dans laquelle b est un nombre valant de 1 à 10, de préférence de 1 à 3, D est un atome d'hydrogène, un groupe alkyle inférieur ou un atome d'halogène, y vaut 0, 1, 2, 3 ou 4 et X représente un pont qui est capable de participer à une conjugaison avec les noyaux aromatiques, tel que par exemple,

O
↑
-N=N-, -N=N-, -COO-, -C=C-, -N=C-, -NCO- et -NCOO- ;

b) des dérivés de l'acide benzoïque, à insaturation éthylénique, représentés par la sturcture

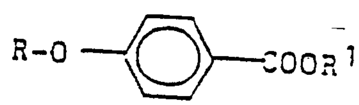

(II)

dans laquelle R représente un radical à substituant(s) inerte(s), ayant une insaturation éthylénique polymérisable et $R^1$ représente
un atome d'hydrogène ou un radical organique à substituant(s) inerte(s);

c) des dérivés bases de Schiff, styréniques à insaturation éthylénique, représentés par la structure

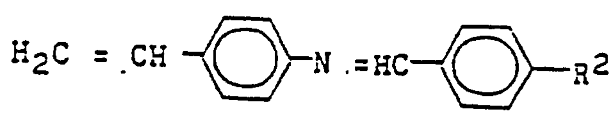

(III)

dans laquelle $R^2$ représente un groupe cyano, un atome d'halogène un groupe éther alkylique à chaîne linéaire, phényle, cyclohexyle ou $–CH=CHCOOR^3$, où $R^3$ est un groupe alkyle à chaîne linéaire, acétyle, acide carboxylique ou un groupe ester ou des groupes amido;

d) des dérivés bases de Schiff, acroyle ou méthacroyle, à insaturation éthylènique, représentés par la structure

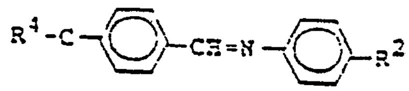

(I7)

dans laquelle $R^2$ est tel que défini précédemment et $R^4$ est $CH_2=CH-$ ou $CH_2=C(CH_3)-$, ou

e) des dérivés stéroïdes, à insaturation éthylénique, représentés par la structure

R–Y–A

dans laquelle A représente

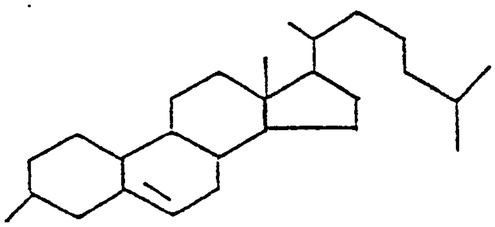

ou

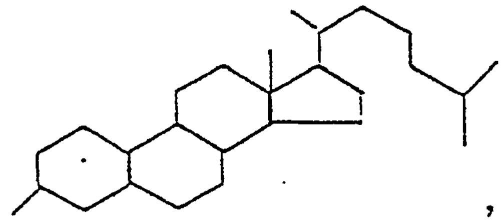

,

Y représente –COO– ou –N–COO–, R est $CH_2=CH-$, $CH_2=C(CH_3)-$, trans $-CH_3CH(CH_2)_x-$, où x est un nombre valant de 1 à 10, ou un groupe hydrocarboné à chaîne linéaire, mono- ou polyinsaturé.

3. Solution ou dispersion selon la revendication 1 ou 2, dans laquelle le composé contenant de l'hydrogène actif contient au moins deux groupes hydroxyle ou deux groupes amine primaire ou secondaire par molécule.

4. Solution ou dispersion selon l'une quelconque des revendications précédentes, dans laquelle ledit polymère est dissous ou dispersé colloïdalement dans le composé contenant de l'hydrogène actif, et la solution contient de 1 à 80 parties du polymère pour 100 parties du composé contenant de l'hydrogène actif.

5. Solution ou dispersion selon la revendication 4, dans laquelle le composé contenant de l'hydrogène actif englobe un polyéther-polyol ayant un poids moyen d'équivalent compris entre 800 et 3000 et une fonctionnalité moyenne allant de 2 à 4 et un agent d'allongement de chaîne glycol ou amine aromatique.

6. Solution selon la revendication 4, dans laquelle le composé contenant de l'hydrogène actif possède un poids moyen d'équivalent allant de 31 à 400 et une fonctionnalité moyenne allant de 3 à 8.

7. Solution ou dispersion selon l'une quelconque des revendications précédentes, dans laquelle ledit polymère est un polymère du produit de réaction d'un isocyanate insaturé et du cholestérol.

8. Procédé de préparation d'un polymère polyuréthane et/ou polyurée caractérisé par la réaction d'un polyisocyanate avec la solution ou la dispersion colloïdale selon l'une quelconque des revendications précédentes.